# EUROPEAN PATENT APPLICATION

(11) **EP 4 718 179 A1**
(43) Date of publication of application: **01.04.2026**
(21) Application number: 24202891.8
(22) Date of filing: 26.09.2024
(51) Int. Cl.: G05B 19/418, G06F 30/20

(54) **COMPUTER-IMPLEMENTED METHOD FOR DETERMINING A YIELD OF A MANUFACTURING PROCESS FOR MANUFACTURING OF A PRODUCT**

(71) Applicant: Siemens Aktiengesellschaft, 80333 München (DE)
(72) Inventor: Diehl, Eric Emanuel, 81735 München (DE); Loukrezis, Dimitrios, 80809 München (DE); Ludwig, Christoph Ernst, 85737 Ismaning (DE)
(74) Representative: Siemens Patent Attorneys

(57) **Abstract**

The invention relates to a computer-implemented method for determining a yield of a manufacturing process for manufacturing of a product, comprising the steps: a. Providing at least one first simulation model (S1); wherein the at least one first simulation model is configured to estimate a performance of the product; b. Providing at least one uncertainty parameter with regard to the manufacturing process (S2); c. Providing a second simulation model; wherein the second simulation model is suitable for uncertainty propagation (S3); d. Determining at least one uncertainty in the performance of the product by applying the second simulation model on the at least one first simulation model and the at least one uncertainty parameter (S4); e. Determining the yield of the manufacturing process based on the at least one determined uncertainty in the performance of the product (S5); and f. Providing the determined yield of the manufacturing process (S6).

Further, the invention relates to a corresponding computer program product and technical system.

## Description

### 1. Technical field

The present invention relates to a computer-implemented method for determining a yield of a manufacturing process for manufacturing of a product. Further, the invention relates to a corresponding computer program product and technical unit.

### 2. Prior art

Currently there is a trend of digitalization in the industry domain. Hence, e.g. a manufacturing process for a product may be digitally controlled. For describing several facets of this trend, the term "Industry 4.0" (in German: "Industrie 4.0") is commonly used. It has become not only a major part of today's industry, but it also drives the business in many industrial domains.

Considering complex industrial plants, the industrial plants usually comprise distinct parts, modules or units with multiple individual functions. Exemplary units include sensors and actuators. The units and functions must be controlled and regulated in an interacting manner. They are often monitored, controlled, and regulated by an automation system. The units can either exchange data directly with one another or communicate via a bus system. The units are connected to the bus system via parallel or, more often, serial interfaces.

The increasing digitalization allows for manufacturing of products in a production line of the industrial plant to be performed by robot units or other autonomous units in an automatic manner and thus efficiently at least in part up to now.

Usually, the production of technical components comprises the design process and the manufacturing process. Thereby, the manufactured product has to meet certain requirements regarding its performance, equivalently referred to as performance requirements in the following. The design can be optimized in view of such requirements and is sensitive with respect to uncertainties which usually arise during manufacturing. Exemplary uncertainties are errors, variability, disturbances, or failures. Most often, this sensitivity has a severely negative impact on the yield of the manufacturing process. Thereby, the yield can be defined as the percentage of functional products, error-free products, or correctly manufactured products or, in other words, products which meet one or more certain performance requirements or conditions. The manufacturing process of semiconductors presents a typical example. Yield rates in semiconductor manufacturing might be as low as 55% for small scale processes according to prior art. Hence, there is an increasing need to provide a method for estimating the yield and improving it for manufacturing processes.

Prior art approaches try to avoid or mitigate the undesired and uncontrollable uncertainties in the design and manufacturing process. Therefore, the manufacturing often takes place in a controlled environment to keep disturbances to a minimum, such as clean rooms. However, the uncertainties cannot be sufficiently eliminated from the design and manufacturing process. Other prior art approaches also have severe disadvantages. Known approaches insufficiently consider or even neglect any changes or adaptations in the manufacturing process and environment, hence changes in the uncertainties.

It is therefore an objective of the invention to provide a computer-implemented method for determining a yield of a manufacturing process for manufacturing of a product, which is more efficient and reliable and considers dynamic changes in the uncertainties.

### 3. Summary of the invention

This problem is according to one aspect of the invention solved by a computer-implemented method for determining a yield of a manufacturing process for manufacturing of a product, comprising the steps:
a. Providing at least one first simulation model; wherein the at least one first simulation model is configured to estimate a performance of the product;
b. Providing at least one uncertainty parameter with regard to the manufacturing process;
c. Providing a second simulation model; wherein the second simulation model is suitable for uncertainty propagation;
d. Determining at least one uncertainty in the performance of the product by applying the second simulation model on the at least one first simulation model and the at least one uncertainty parameter;
e. Determining the yield of the manufacturing process based on the at least one determined uncertainty in the performance of the product; and
f. Providing the determined yield of the manufacturing process.

Accordingly, the invention is directed to the computer-implemented method for determining the yield of the manufacturing process for manufacturing the product. In other words, the yield with regard to the manufacturing of the product is estimated. For example, semiconductors are manufactured in a small-scale or large-scale process. The yield of the manufacturing process of the semiconductors can be estimated. The yield can also be interpreted as yield rate or yield ratio.

The product can be manufactured in a technical system, manufacturing environment or any other factory. Preferably, the product is manufactured in a safety-critical system, such as an industrial plant. The industrial plant can comprise sensors and actuators. The product can be a technical component, such as a semiconductor.

Therefore, the at least one first simulation model, the at least one uncertainty parameter and the second simulation model are provided as input for the determination of the yield or yield estimation. The at least one first simulation model can be provided in the form of one single simulation model or a plurality of simulation models. The plurality of simulation models can be combined. Therefore, the at least one first simulation model can be based on any suitable software. The first simulation model can estimate the performance of the product, preferably with regard to a given design, wherein the design can be defined in the design process of the production. An exemplary performance of a semiconductor is the switching capability or efficiency of the semiconductor. The at least one uncertainty parameter can be equally referred to as variability parameter. Thereby, the uncertainty parameter can describe at least one considered uncertainty source. The second simulation model is suitable for uncertainty propagation. The uncertainty propagation means the propagation of the uncertainty and can be defined as the impact of a parameter's uncertainty on the uncertainty of the product performance. An uncertainty can arise within the manufacturing process, e.g. manufacturing of the semiconductors. The uncertainty can affect the product's performance, which becomes also uncertain. Referring to the semiconductors, their efficiency might decline due to disturbances in the manufacturing process.

The input, such as simulation models or any other input data, can be received and/or transmitted via one or more input interfaces of a technical unit or technical system, wherein the technical unit can be designed as any computing unit. Additionally or alternatively, the output data in form of the determined yield can be sent via one or more output interfaces. This way, data can be efficiently transmitted between computing units reducing data traffic and allowing for bidirectional data exchange. The input data and/or output data can be extended with additional data or information.

Then, in a next step, the provided input is used to determine the at least one uncertainty in the performance of the product by means of the second simulation model for said uncertainty propagation. In other words, the simulation is utilized to determine the at least one uncertainty. The at least one determined uncertainty in the performance is then used to determine the yield, in other words, perform the yield estimation.

In the last step, the determined yield of the manufacturing process is provided as output, which can be transmitted or alternatively handled.

The advantage of the present invention is that the yield can be determined in an efficient and reliable manner. Contrary to prior art, any uncertainties in the form of the uncertainty parameters are incorporated in the full design and manufacturing process as well as considered in the yield determination. This way, the product's performance and/or the yield of the manufacturing process can be evaluated as optimization targets and optimized in a probabilistic manner.

In an aspect the at least one uncertainty parameter is a plurality of uncertainty parameters and is provided in form of a probability distribution, wherein the probability distribution is preferably a Gaussian distribution or a uniform distribution. Accordingly, various uncertainty sources that can arise within the manufacturing process can be identified and/or described in a suitable form. Therefore, a probability distribution with corresponding distribution parameters in form of the uncertainty parameters is utilized. Thereby, the Gaussian distribution can be defined with a specific mean and variance. The uniform distribution can be defined with specific lower and upper limits. Characterizing input parameters by a probability distribution captures their inherent uncertainty and hence enables the determination of the respective output uncertainty.

In a further aspect the second simulation model is a probabilistic simulation model. Accordingly, the second simulation model is designed as a probabilistic simulation model. The probabilistic simulation model combines the at least one first simulation model and the at least one uncertainty parameter. The probabilistic simulation model can be based on any method or approach which is suitable for uncertainty propagation, also referred to as forward uncertainty quantification. For example, Monte Carlo, polynomial chaos expansion, Gaussian process regression, stochastic collocation, etc. can be utilized as approaches for this purpose. The propagation can be based on any suitable software. The second simulation model can be flexibly selected and adapted depending on the underlying technical system, the user requirements, the specific use case or any other conditions or demands.

In a further aspect the at least one determined uncertainty in the performance of the product can be defined as a statistical moment or a continuous probability distribution. Accordingly, the at least one uncertainty can be described in various forms, such as statistical moments. Exemplary statistical moments are mean, variance, skewness, kurtosis and higher order moments. The uncertainty form can be flexibly selected and adapted depending on the underlying technical system, the user requirements, the specific use case or any other conditions.

In a further aspect the determined yield of the manufacturing process is defined as a ratio between a number of manufactured products that meet at least one pre-defined performance requirement and a total number of manufactured products. Preferably, the at least one pre-defined performance requirement is defined as a plurality of requirements which are all met. Accordingly, the yield can be defined as a ratio. The ratio is based on two distinct numbers. The manufactured products are considered, which meet the pre-defined performance requirement (subset or the whole set of manufactured products). Hence these products are correctly manufactured without errors or failures and are in other words error-free. They can be directly delivered or used. Hence, they do not need any post-processing which is time-consuming and expensive. Further, all manufactured products or the whole set of manufactured products are considered.

The yield provides a reliable estimate for the number or amount, such as percentage, of correctly manufactured products. The yield can be advantageously used as basis and input for further improvements of the manufacturing process etc.

In a further aspect the computer-implemented method further comprises
- Updating the at least one uncertainty parameter with regard to the manufacturing process in consideration of the determined yield of the manufacturing process and/or any other additional update information. Accordingly, an inverse uncertainty quantification approach is used to calibrate the distribution of the uncertainty parameters or the uncertainty parameter which describe the considered uncertainty sources. This step can be repeated in a flexible manner, e.g. depending on changes that occur in the manufacturing process itself. Accordingly, the update can be triggered by an event, can be performed on demand or performed on a continuous basis in regular intervals. The update or calibration has proven to be advantageous since this update results in an updated or adapted uncertainty parameter as uncertainty parameter. This updated uncertainty parameter can have an effect or adapted effect on the performance of the product. For example, the updated uncertainty parameter can be used as input for any of the aforementioned method steps, such as determination or estimation step, e.g. step (d): Determining an uncertainty in the performance of the product by applying the second simulation model on the at least one first simulation model and the at least one updated uncertainty parameter.

In a further aspect the computer-implemented method further comprises
- Increasing the determined and/or updated yield of the manufacturing process, preferably while at the same time maintaining a pre-defined performance of the product using an optimization approach in consideration of the determined yield, the updated yield, the at least one uncertainty parameter and/or the at least one updated uncertainty parameter; and/or
- Increasing the performance of the product, preferably while at the same time maintaining a pre-defined yield using an optimization approach in consideration of the determined yield, the updated yield, the at least one uncertainty parameter and/or the at least one updated uncertainty parameter.

Accordingly, the uncertainty parameter, the yield and/or simulation models can be used for subsequent improvements of diverse optimization targets. For example, the yield and/or the performance of the product can be optimized in an efficient and reliable manner.

In a further aspect the computer-implemented method further comprises
- Outputting the determined yield of the manufacturing process and/or any related input or output data;
- Storing the determined yield of the manufacturing process and/or any related input or output data;
- Displaying the determined yield of the manufacturing process and/or any related input or output data;
- Transmitting the determined yield of the manufacturing process and/or any related input or output data; and/or
- Evaluating the determined yield of the manufacturing process and/or any related input or output data.

Accordingly, the input data, data of intermediate method steps and/or resulting output data can be further handled. The output data is in particular the determined yield. One or more actions can be performed. The action can be equally referred to as measure.

These actions can be performed by one or more technical units, such as computing units or robot units. The actions can be performed gradually or simultaneously. Actions include e.g. storing and processing steps. The advantage is that appropriate actions can be performed in a timely manner.

For example, the determined yield can be immediately outputted and/or displayed to a user by means of a display unit. The determined yield can be extended with further information, such as models. The user can perform an evaluation or additional check based on the outputted determined yield etc. to confirm the yield.

A further aspect of the invention is a computer program product directly loadable into an internal memory of a computer, comprising software code portions for performing the steps according to any one of the preceding claims when said computer program product is running on a computer.

A further aspect of the invention is a technical unit for performing the aforementioned computer-implemented method.

The technical unit may be realized as any device, or any means, for computing, in particular for executing a software, an app, or an algorithm. For example, the technical unit may comprise a central processing unit (CPU) and a memory operatively connected to the CPU. The technical system may also comprise an array of CPUs, an array of graphical processing units (GPUs), at least one application-specific integrated circuit (ASIC), at least one field-programmable gate array, or any combination of the foregoing. The technical unit may comprise at least one module which in turn may comprise software and/or hardware. Some, or even all, modules of the technical system may be implemented by a cloud computing platform.

### 4. Short description of the drawings

In the following detailed description, presently preferred embodiments of the invention are further described with reference to the following figure:
Fig. 1 illustrates a flowchart of the computer-implemented method for determining a yield of a manufacturing process for manufacturing of a product according to the invention with the method steps S1 to S6.
Fig. 2 shows a schematic illustration of the uncertainty propagation according to prior art.
Fig. 3 shows a schematic illustration of the cloud-based information exchange between the supplier, the manufacturer, and the designer according to prior art.

### 5. Detailed description of preferred embodiments

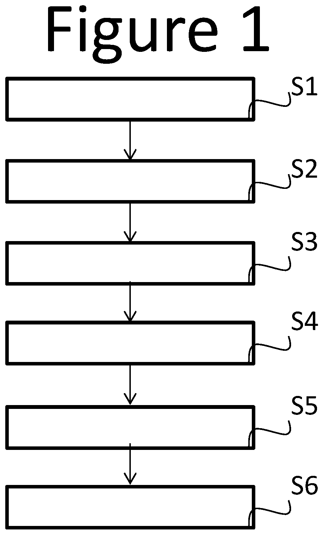

Figure 1 illustrates a flowchart of the computer-implemented method for determining a yield of a manufacturing process for manufacturing of a product according to the invention. In the first step, the at least one first simulation model is provided S1. The at least one first simulation model is configured to estimate the performance of the product. In the second step, the at least one uncertainty parameter with regard to the manufacturing process is provided S2. In the next step, the second simulation model is provided S3. The second simulation model is suitable for the uncertainty propagation. The at least one uncertainty in the performance of the product is determined by applying the second simulation model on the at least one first simulation model and the at least one uncertainty parameter S4. The yield of the manufacturing process is determined. The determination is based on the at least one determined uncertainty in the performance of the product S5. In the last step the determined yield of the manufacturing process is provided S6.

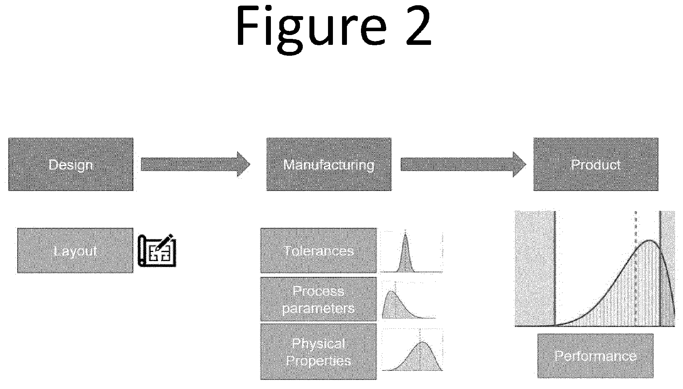

Fig. 2 shows a schematic illustration of the uncertainty propagation according to prior art. Despite being given a specific product design (left column), the uncertainties arising within the manufacturing process (middle column) can affect the product's performance (right column), which can become also uncertain. The product's performance is depicted as probability distribution in the right column. Boundaries or thresholds can be defined for the product performance.

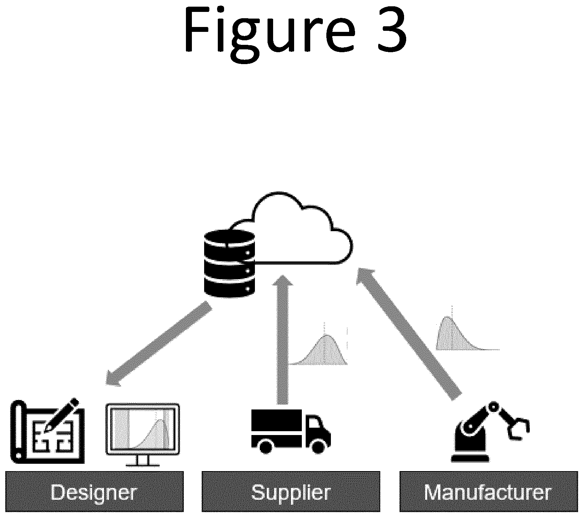

Fig. 3 shows a schematic illustration of the cloud-based data exchange between the supplier, the manufacturer, and the designer according to prior art. The data can be exchanged bidirectionally. The data can comprise the uncertainties, in the form of the uncertainty parameters and/or any other information. The data can be stored in a volatile or non-volatile storage unit, such as cloud or database.

## Claims

1. Computer-implemented method for determining a yield of a manufacturing process for manufacturing of a product, comprising the steps:
a. Providing at least one first simulation model (S1); wherein the at least one first simulation model is configured to estimate a performance of the product;
b. Providing at least one uncertainty parameter with regard to the manufacturing process (S2);
c. Providing a second simulation model; wherein the second simulation model is suitable for uncertainty propagation (S3);
d. Determining at least one uncertainty in the performance of the product by applying the second simulation model on the at least one first simulation model and the at least one uncertainty parameter (S4);
e. Determining the yield of the manufacturing process based on the at least one determined uncertainty in the performance of the product (S5); and
f. Providing the determined yield of the manufacturing process (S6).

2. Computer-implemented method according to claim 1, wherein the at least one uncertainty parameter is a plurality of uncertainty parameters and is provided in form of a probability distribution, wherein the probability distribution is preferably a Gaussian distribution or a uniform distribution.

3. Computer-implemented method according to claim 1 or claim 2, wherein the second simulation model is a probabilistic simulation model.

4. Computer-implemented method according to any of the preceding claims, wherein the at least one determined uncertainty in the performance of the product can be defined as a statistical moment or a continuous probability distribution.

5. Computer-implemented method according to any of the preceding claims, wherein the determined yield of the manufacturing process is defined as a ratio between a number of manufactured products that meet at least one pre-defined performance requirement and a total number of manufactured products.

6. Computer-implemented method according to any of the preceding claims, further comprising
- Updating the at least one uncertainty parameter with regard to the manufacturing process in consideration of the determined yield of the manufacturing process and/or any other additional update information.

7. Computer-implemented method according to any of the preceding claims, further comprising
- Increasing the determined and/or updated yield of the manufacturing process, preferably while at the same time maintaining a pre-defined performance of the product using an optimization approach in consideration of the determined yield, the updated yield, the at least one uncertainty parameter and/or at least one updated uncertainty parameter; and/or
- Increasing the performance of the product, preferably while at the same time maintaining a pre-defined yield using an optimization approach in consideration of the determined yield, the updated yield, the at least one uncertainty parameter and/or at least one updated uncertainty parameter.

8. Computer-implemented method according to any of the preceding claims, further comprising
- Outputting the determined yield of the manufacturing process and/or any related input or output data;
- Storing the determined yield of the manufacturing process and/or any related input or output data;
- Displaying the determined yield of the manufacturing process and/or any related input or output data;
- Transmitting the determined yield of the manufacturing process and/or any related input or output data; and/or
- Evaluating the determined yield of the manufacturing process and/or any related input or output data.

9. A computer program product directly loadable into an internal memory of a computer, comprising software code portions for performing the steps according to any one of the preceding claims when said computer program product is running on a computer.

10. Technical unit for performing the method according to any one of claims 1-8.
